# EUROPÄISCHE PATENTSCHRIFT

(11) **EP 1 747 975 B1**
(45) Veröffentlichungstag und Bekanntmachung des Hinweises auf die Patenterteilung: **23.06.2010**
(21) Anmeldenummer: 06013727.0
(22) Anmeldetag: 03.07.2006
(51) Int. Cl.: B62D 27/02, B62D 65/06, B60J 7/10, B60J 7/11

(54) **Dachmodul für Kraftfahrzeuge**
Roof module for motor vehicles
Module de toit pour des véhicules automobiles

(30) Priorität: 27.07.2005 DE 102005035807
(43) Veröffentlichungstag der Anmeldung: 31.01.2007
(73) Patentinhaber: Plastal GmbH, 91781 Weissenburg (DE)
(72) Erfinder: Diaz, Francisco Javier, 91785 Pleinfeld (DE)
(74) Vertreter: Scherzberg, Andreas Hans

(56) Entgegenhaltungen:
- EP-A2- 1 008 510
- EP-A2- 1 325 862
- EP-A2- 1 384 655
- DE-A1- 2 929 915
- DE-A1- 19 709 016
- DE-A1- 19 853 820
- DE-C1- 4 313 555
- GB-A- 2 095 185
- US-A- 4 626 026

## Beschreibung

Die Erfindung betrifft ein Dachmodul nach dem Oberbegriff des Anspruchs 1 und ein Verfahren zur Befestigung eines solchen Dachmoduls. Ein solches Dachmodul ist aus EP 1384655 A bekannt.
Es sind Dachmodule für Kraftfahrzeuge bekannt, die aus einem Dachmodulrahmen aus Metall und einer oder mehreren Scheiben aus Glas bestehen, wobei die Scheiben auf dem Dachmodulrahmen in der Regel vormontiert sind. Das gesamte Dachmodul wird beim Einbau auf die an das Dachmodul angepasste Öffnung in der Karosserie aufgesetzt und mit der Karosserie verklebt.

Der Klebevorgang ist eine übliche Methode, um zu verhindern, dass vom Innenraum des Kraftfahrzeugs aus gearbeitet werden muss. Dieses würde zusätzliche Durchbrüche, z. B. zum Verschrauben, erfordern, die nachträglich wieder abzudichten sind. Bei dem Fertigungsschritt des Klebens handelt es sich jedoch um einen teuren und aufwändigen Arbeitsschritt.

Der Erfindung liegt die Aufgabe zugrunde, ein Dachmodul nach dem Oberbegriff des Anspruchs 1 so zu verbessern, dass bei der späteren Montage am Kraftfahrzeug ein Klebevorgang vermieden ist und alle Arbeitsschritte von außerhalb der Karosserie des Kraftfahrzeugs aus verrichtet werden können. Außerdem soll ein Verfahren zur Montage des erfindungsgemäßen Dachmoduls am Kraftfahrzeug angegeben werden.

Erfindungsgemäß wird diese Aufgabe durch die Merkmale des Anspruchs 1 und bezüglich des Verfahrens durch die Merkmale des Anspruchs 11 gelöst.

Dadurch, dass im Einbauzustand das Dachmodul an drei Seiten über Steckverbindungen mit der Karosserie des Kraftfahrzeugs formschlüssig arretiert ist, das Dachmodul an einer Stirnseite an der Karosserie befestigt ist und der Befestigungsbereich durch eine Blende abgedeckt ist, ist bei der Montage ein Klebevorgang vermieden und alle Arbeitsschritte sind von außerhalb des Kraftfahrzeugs aus zu verrichten.

Das erfindungsgemäße Merkmal, dass das Dachmodul an einer Stirnseite an der Karosserie befestigt ist, bedeutet auch jede Befestigungsart, die das Dachmodul an der Stirnseite fixiert. Bevorzugt erfolgt die Befestigung über Schrauben.

In bevorzugter Ausgestaltung ist das komplette Dachmodul vornehmlich aus Kunststoff hergestellt, wobei die Scheiben aus durchsichtigem Kunststoff bestehen und der Dachmodulrahmen an die Scheiben angespritzt ist.

Vornehmlich bedeutet in diesem Zusammenhang, dass auch Metallinlays, bzw. Metalleinlagen und andere Verstärkungsteile auch in Hybridtechnik in den Kunststoff eingesetzt und hinterspritzt werden können.

Zur Verankerung über Steckverbindungen weist die der Befestigung entgegengesetzte Stirnseite des Dachmoduls an ihrem Dachmodulrahmen einen L- oder U-förmigen Fixierungsbereich auf, der auf eine entsprechende Ausgestaltung der Karosserie aufschiebbar und arretierbar ist.

Sinnvollerweise ist die entsprechende Ausgestaltung am Front-Querträger angeordnet.

Zur Befestigung an den Längsseiten weist der Dachmodulrahmen an seinen beiden Längsseiten hakenförmige Eingriffe auf, mit denen das Dachmodul auf karosserieseitige Zapfen aufschiebbar ist und dadurch seitlich verankerbar ist. Unter hakenförmige Zapfen werden auch Fortsätze allgemein verstanden. Es eignet sich jede formschlüssige und/oder kraftschlüssige Befestigung.

Die dem Befestigungsbereich abdeckende Blende ist über Befestigungselemente mit der Karosserie verankerbar.

Zweckmäßigerweise sind die Befestigungselemente Schrauben, die mit dem Heck-Querträger verschraubt sind.

Zur Abdichtung ist zwischen der Karosserie und dem Dachmodulrahmen und zwischen dem Dachmodulrahmen und der Blende ein Dichtungsmaterial, bevorzugt aus Moosgummi angeordnet. Das Dichtungsmaterial ist bevorzugt ein Dichtungsband.

Ein wesentliches Merkmal ist, dass der Befestigungsbereich des Dachmoduls mit der Karosserie und die Befestigung der Blende mit der Karosserie unterhalb der Dachoberfläche liegt.

Bevorzugt ist die Befestigung der Blende vom oberen Teil der Heckklappe abgedeckt.

Ein Verfahren zur Befestigung eines erfindungsgemäßen Dachmoduls an einem Kraftfahrzeug ist dadurch gekennzeichnet, dass folgende Arbeitsschritte der Reihe nach ausgeführt werden:
- Ein Dichtungsmaterial wird auf den längsseitigen Rand und die Stirnseite des Dachmodulrahmens und dem später zur Scheibe gewandten Rand der Blende aufgesetzt.
- Das Dachmodul wird auf die Karosserie aufgesetzt.
- das Dachmodul wird durch Verschieben in Längsrichtung an den zwei Längsseiten über die hakenförmigen Eingriffe und an der dem Verschraubungsbereich entgegengesetzten Stirnseite über Steckverbindungen mit der Karosserie an drei Seiten verankert.
- Das Dachmodul wird an der den Steckverbindungen entgegengesetzten Stirnseite bevorzugt mit Schrauben an der Karosserie (3) fixiert.
- Die Blende wird auf den Befestigungsbereich aufgesetzt, in Endstellung gebracht und z.B. mit Schrauben an der Karosserie befestigt.

Weitere Merkmale der Erfindung ergeben sich aus den Figuren, die nachfolgend beschrieben werden.

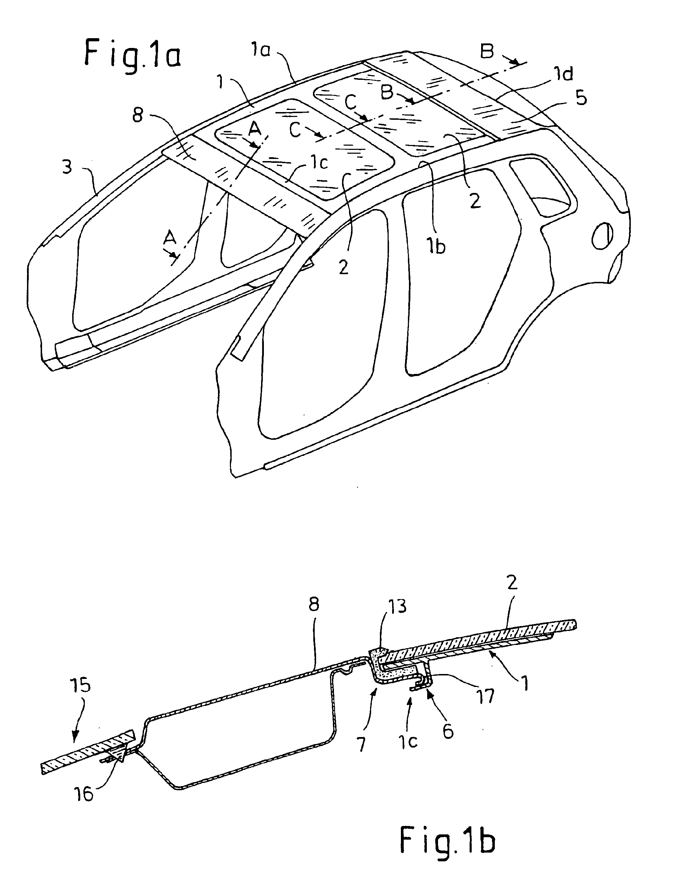

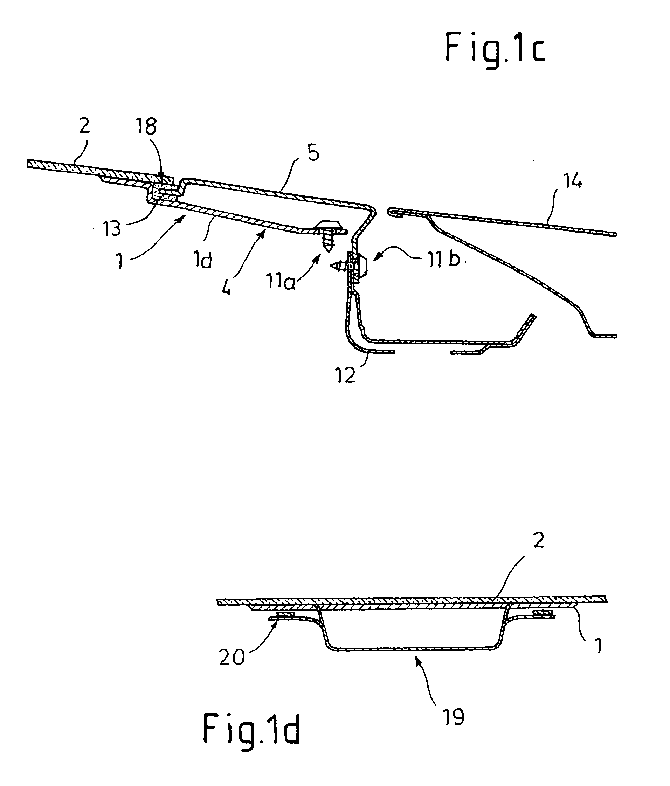

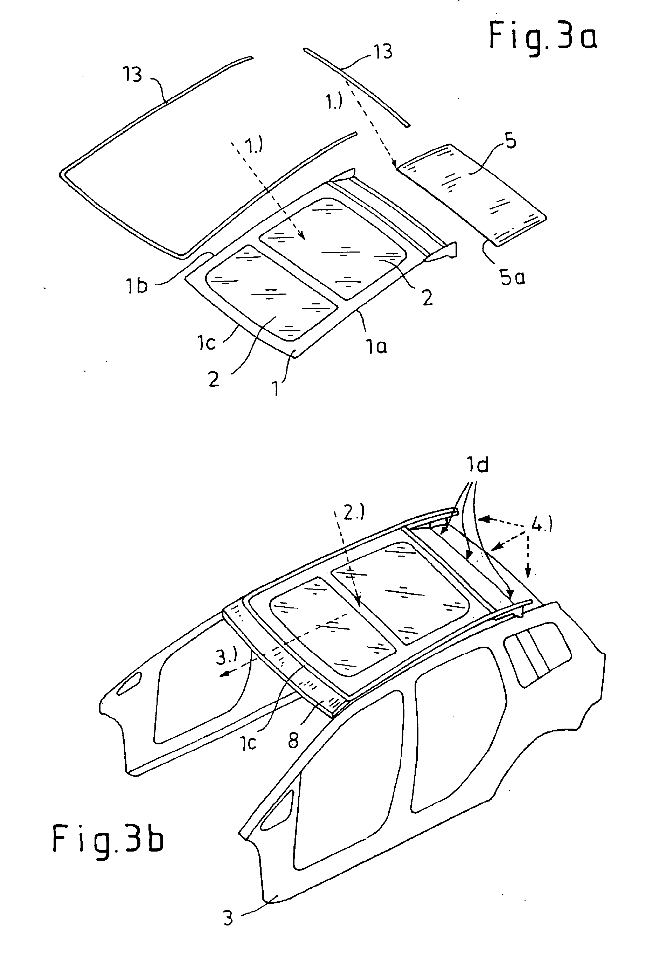

Fig. 1 a zeigt eine Karosserie 3 eines Kraftfahrzeugs. Auf das Dach ist ein erfindungsgemäßes Dachmodul aufgesetzt. Dieses Dachmodul besteht aus einem Dachmodulrahmen 1 mit zwei Längsseiten 1a, 1b und zwei Stirnseiten 1c, 1d. In dem Dachmodul sind zwei Scheiben 2 integriert. Dieses Dachmodul ist auch in Figur 3a gezeigt.

Das komplette Dachmodul ist aus Kunststoff hergestellt, wobei die Scheiben 2 aus durchsichtigem Kunststoff bestehen und der Dachmodulrahmen 1 an die Scheiben 2 angespritzt ist. Es können jedoch auch Scheiben 2 aus Glas verwendet werden, wobei der Dachmodulrahmen 1 an die Scheiben 2 vorteilhaft angespritzt wird.

Das Dachmodul deckt das Dach der Karosserie 3 vollständig ab und ist über Steckverbindungen und Befestigungen mit der Karosserie 3 fest verankert. Diese Steckverbindungen und Befestigungen werden nachfolgend anhand der Figuren eingehend erläutert.

Besonders vorteilhaft ist bei diesem Dachmodul, dass es von außerhalb der Karosserie 3 auf diese aufgesetzt und verankert werden kann, so dass keine Arbeiten innerhalb der Karosserie 3 auszuführen sind.

Fig. 1b zeigt einen Schnitt entlang der Linie A-A in Fig. 1 a inklusive eines Teils der Windschutzscheibe 15, welche in Fig. 1a jedoch nicht gezeigt ist.

Diese Windschutzscheibe 15 ist über eine Kleberaupe 16 am Front-Querträger 8 befestigt bzw. aufgeklebt. Der Front-Querträger 8 verbindet im Dachbereich die beiden Längsseiten der Karosserie 3.

Das Dachmodul besteht aus Scheiben 2 mit einem angespritzten Dachmodulrahmen 1. Dieser Dachmodulrahmen 1 ist an seiner zum Front-Querträger 8 gewandten Stirnseite 1 c L-förmig ausgebildet und wird über eine Steckverbindung am Front-Querträger 8 befestigt. Hierzu weist der zum Dachmodul gewandte Rand des Front-Querträgers 8 eine an die Stirnseite 1c des Dachmodulrahmens 1 angepasste Ausgestaltung 7 auf. Diese Ausgestaltung 7 besteht in dem hier gezeigten Beispiel aus einer im Schnitt L-förmigen Auskragung, die an ihrem Ende eine Kröpfung 17 aufweist. Auf diese Ausgestaltung 7 mit der Kröpfung 17 wird der Fixierungsbereich 6 der L-förmig ausgebildeten Stirnseite 1c des Dachmodulrahmens 1 aufgeschoben.

Zwischen dem Dachmodulrahmen 1 bzw. der Stirnseite 1 c und dem Front-Querträger 8 in Form der Ausgestaltung 7 ist ein Dichtungsmaterial 13 angeordnet.

Die Montage des Dachmoduls wird in Bezug auf die Stirnseite 1 c durch Auflegen des Dachmoduls auf die Karosserie 3 und anschließendem Verschieben des Dachmoduls in Richtung zum Front-Querträger 8 hin erreicht.

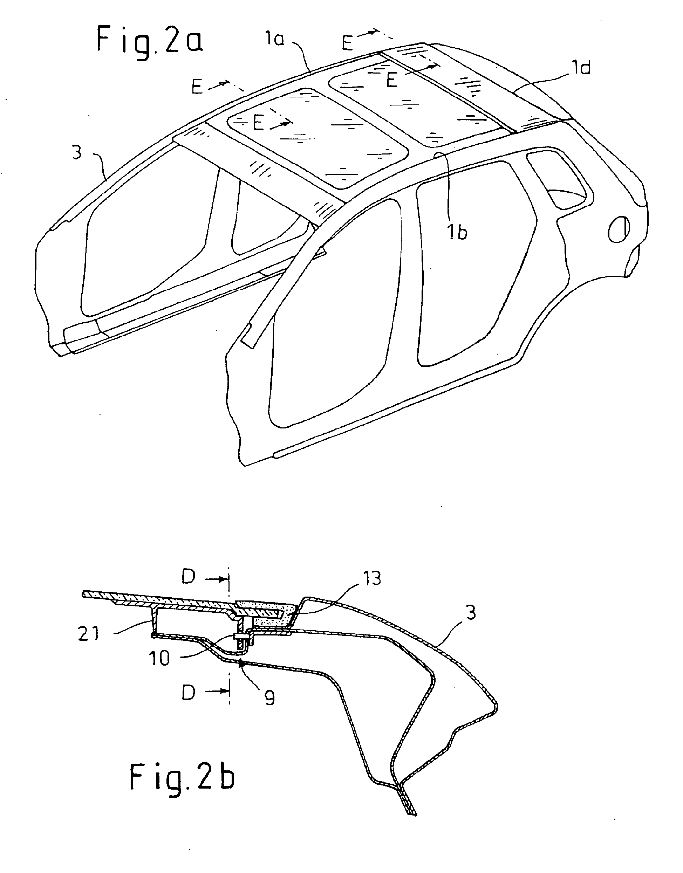

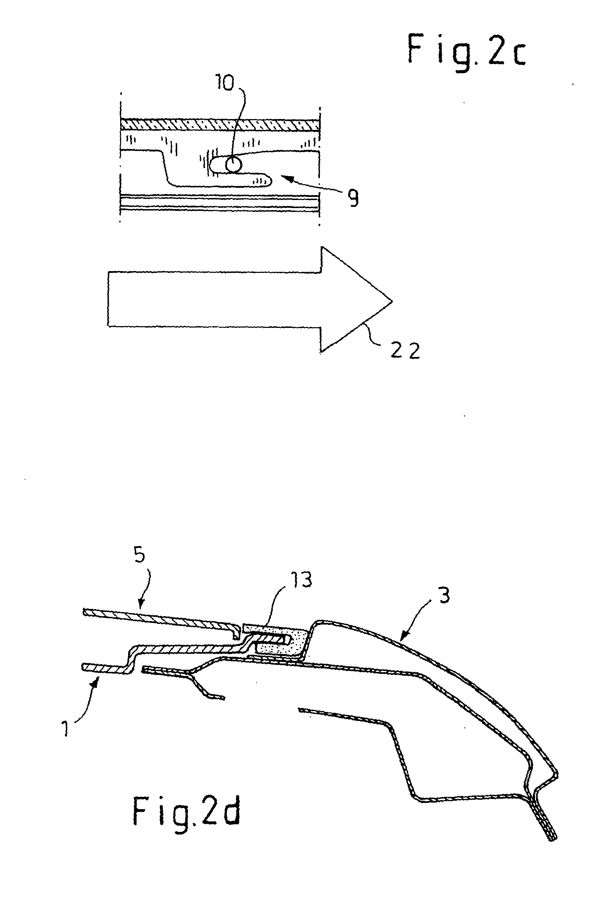

Weitere Steckverbindungen befinden sich an den Längsseiten 1a, 1b des Dachmodulrahmens 1. Diese werden weiter unten an Hand der Figuren 2a, 2b, 2c beschrieben.

Figur 1c zeigt einen Schnitt entlang der Linie B-B in Figur 1a. In dieser Figur 1c ist der Befestigungsbereich 4 des heckseitigen Endes bzw. der heckseitigen Stirnseite 1 d des Dachmodulrahmens mit der Karosserie gezeigt.

Diese heckseitige Stirnseite 1d ist in dem hier gezeigten Beispiel über Schrauben 11a mit der Karosserie bzw. in diesem Ausführungsbeispiel mit dem Heck-Querträger 12 verschraubt. Damit der Befestigungsbereich 4 von außen nicht sichtbar ist, ist dieser mit einer Blende 5 abgedeckt. Figur 1 a zeigt diese Blende 5, die sich über die gesamte Breite des Daches 3 erstreckt.

Damit kein Wasser in den Befestigungsbereich 4 eindringen kann, ist zwischen dem Ende der Scheibe 2 und dem Dachmodulrahmen 1 eine Einbuchtung 18 vorgesehen, in die die Blende 5 mit ihrer zur Scheibe 2 gewandten Seite hineinragt. Auch hier ist auf die genannte, in die Einbuchtung 18 ragende Seite ein Dichtungsmaterial 13 aufgesteckt (siehe auch Figur 3a).

Befestigt ist die Blende 5 einerseits über das Einschieben in die Einbuchtung 18 und andererseits über Schrauben 11b, die die Blende 5 am Heck-Querträger 12 verankern. Da der Befestigungsbereich 4 mit den Schrauben 11 a, 11b unterhalb der Dachoberfläche liegt, lässt er sich leicht abdecken. Die Schrauben 11 b sind dabei, vom oberen Ende der Heckklappe 14 abgedeckt.

Die Figur 1d zeigt einen Schnitt entlang der Linie C-C von Figur 1a. Der Querträger der B-Säule ist mit dem Bezugszeichen 19 bezeichnet. Auf diesem Querträger 19 ist der Dachmodulrahmen 1 über Abstandshalter 20 aus Schaumstoff aufgelegt. Der Dachmodulrahmen 1 ist wie schon beschrieben an die Scheiben 2 angespritzt.

In den Figuren 2a, 2b, 2c und 2d ist die seitliche Verankerung des Dachmoduls bzw. des Dachmodulrahmens 1 über Steckverbindungen mit der Karosserie 3 gezeigt. Figur 2a zeigt dieselbe Karosserie 3 wie die Figur 1 a.

Figur 2b zeigt einen Schnitt entlang der Linie E-E in Figur 2a. Die Längsseiten 1a, 1b des Dachmodulrahmens 1 weisen hakenförmige Eingriffe 9 (siehe auch Figur 2c) auf, die nach dem Auflegen des Dachmoduls 1 auf die Karosserie 3 und anschließendem Verschieben auf karosserieseitige Zapfen 10 aufgeschoben werden. Hierdurch ist eine seitliche Verankerung des Dachmoduls erreicht. Wieder ist auf die seitlichen Enden bzw. Längsseiten 1a,1b ein Dichtungsmaterial 13 aufgeschoben, so dass das Dachmodul an den Längsseiten 1a, 1b abgedichtet ist.

Damit eine definierte Position des Dachmoduls erreicht ist, sind am Dachmodulrahmen 1 Abstandshalter 21 angeordnet, die auf der Karosserie 3 aufliegen.

Figur 2c zeigt einem vergrößerten Ausschnitt der hakenförmigen Eingriffe 9 und der karosserieseitigen Zapfen 10. Die Bewegungsrichtung beim Verschieben des auf die Karosserie 3 aufgelegten Dachmoduls ist durch den Pfeil 22 gekennzeichnet.

Figur 2d zeigt einen Schnitt entlang der Linie E-E in Figur 2a. Wieder ist zur Abdichtung ein Dichtungsmaterial 13 auf die Längsseite des Dachmodulrahmens 1 im Bereich der Blende 5 aufgesetzt. Die Blende 5 grenzt an dieses Dichtungsmaterial 13 an. Die Karosserie ist wieder mit dem Bezugszeichen 3 bezeichnet.

In den Figuren 3a, 3b, 3c sind die einzelnen Arbeitsschritte zur Befestigung des erfindungsgemäßen Dachmoduls auf der Karosserie 3 eines Kraftfahrzeugs und im speziellen eines Personenkraftwagens gezeigt. Das komplette Dachmodul wird auch als Panoramadach bezeichnet.

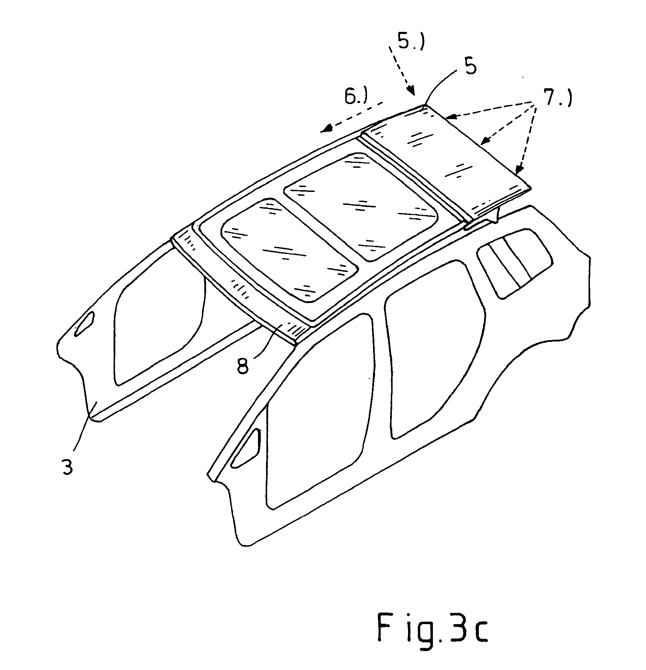

Folgende Arbeitsschritte werden der Reihe nach ausgeführt. Die einzelnen Arbeitsschritte sind in den Figuren und in der nachfolgenden Beschreibung durch 1), 2), 3), 4), 5), 6), 7) gekennzeichnet.
1) In einem ersten Arbeitsschritt (siehe Figur 3a) wird ein Dichtungsmaterial 13 auf den längsseitigen Rand 1a, 1b, auf die Stirnseite 1c und den später zur Scheibe 2 gewandten Rand 5a der Blende 5 aufgesetzt.
2) In einem zweiten Arbeitsschritt (siehe Figur 3b) wird das Dachmodul auf die Karosserie 3 aufgesetzt.
3) In einem dritten Arbeitsschritt (siehe Figur 3b) wird das aufgesetzte Dachmodul durch Verschieben in Richtung (siehe Pfeil) zum Front-Querträger 8 verschoben. Hierbei verrasten die Steckverbindungen am Dachmodulrahmen an den Längsseiten 1a, 1b und an der Stirnseite 1c mit den zugehörigen Teilen an der Karosserie 3.
4) In einem vierten Arbeitsschritt (siehe Figur 3b) wird der Dachmodulrahmen 1 am heckseitigen Ende über Schrauben 11 a (siehe Figur 1c) am Heck-Querträger 12 (siehe Figur 1c) verankert.
5) In einem fünften Arbeitsschritt (siehe Figur 3c) wird die Blende 5 auf dem Befestigungsbereich 4 positioniert.
6) In einem sechsten Arbeitsschritt (siehe Figur 3c) wird die Blende 5 in Richtung zum Dachmodulrahmen, bzw. dessen heckseitigen Stirnseite 1d verschoben, so dass sich der Rand 5a der Blende 5 in die Einbuchtung 18 schiebt.
7) In einem siebten Arbeitsschritt (siehe Figur 3c) wird die Blende 5 durch Schrauben 11 b (siehe Figur 1c) am Heck-Querträger 12 (siehe Figur 1c) verankert.

Das erfindungsgemäße Dachmodul kann auch den Befestigungsbereich 4 an der bugseitigen Stirnseite 1c aufweisen, wobei sich die in Figur 1b gezeigte Steckverbindung dann am heckseitigen Ende des Dachmoduls befinden würde.

Ebenso können die hakenförmigen Eingriffe 9 auch an der Karosserie 3 und die Zapfen 10 am Dachmodulrahmen 1 angeordnet sein. Dies muss je nach den Gegebenheiten der Karosserie 3 ausgewählt werden. Wichtig ist nur eine formschlüssige und/oder kraftschlüssige Befestigung.

## Patentansprüche

1. Fahrzeug mit Dachmodul und mit einem Dachmodulrahmen (1) mit zwei Längsseiten (1a, 1b) und zwei Stirnseiten (1c, 1d) und einer oder mehreren Scheiben (2) eingebaut in die Karosserie (3) des Kraftfahrzeugs, welches eine an das Dachmodul angepasste Öffnung im Dach aufweist, wobei im Einbauzustand das Dachmodul an drei Seiten (1a, 1b, 1c) über Steckverbindungen mit der Karosserie (3) des Kraftfahrzeugs formschlüssig arretiert ist, das Dachmodul an einer Stirnseite (1d) an der Karosserie (3) befestigt ist und der Befestigungsbereich (4) durch eine Blende (5) abgedeckt ist, **dadurch gekennzeichnet, dass**
- ein Dichtungsmaterial (13) auf dem längsseitigen Rand (1a, 1b) und die Stirnseite (1c) des Dachmodulrahmens (1) und dem später zur Scheibe (2) gewandten Rand (5a) der Blende (5) aufgesetzt ist,
- das Dachmodul von außen auf die Karosserie (3) aufgesetzt ist,
- das Dachmodul an den zwei Längsseiten (1 a, 1b) über hakenförmige Eingriffe (9) und an der dem Befestigungsbereich (4) entgegengesetzten Stirnseite (1 c) über Steckverbindungen mit der Karosserie (3) an drei Seiten (1 a, 1 b, 1 c) verankert ist,
- das Dachmodul an der den Steckverbindungen entgegengesetzten Stirnseite (1d) an der Karosserie (3) fixiert ist und
- die Blende (5) auf den Befestigungsbereich (4) aufgesetzt ist und in Endstellung gebracht an der Karosserie (3) befestigt ist.

2. Fahrzeug nach Anspruch 1, **dadurch gekennzeichnet, dass** das komplette Dachmodul aus Kunststoff hergestellt ist und die Scheiben (2) aus durchsichtigem Kunststoff bestehen und der Dachmodulrahmen (1) an die Scheiben (2) angespritzt ist.

3. Fahrzeug nach Anspruch 1 oder 2, **dadurch gekennzeichnet, dass** die dem Befestigungsbereich (4) entgegengesetzte Stirnseite an ihrem Dachmodulrahmen (1c) einen L- oder U-förmigen Fixierungsbereich (6) aufweist, der auf eine entsprechende Ausgestaltung (7) der Karosserie (3) aufgeschoben und arretiert ist.

4. Fahrzeug nach Anspruch 3, **dadurch gekennzeichnet, dass** die entsprechende Ausgestaltung (7) am Front-Querträger (8) angeordnet ist.

5. Fahrzeug nach einem der Ansprüche 1 bis 4, **dadurch gekennzeichnet, dass** der Dachmodulrahmen (1) an seinen beiden Längsseiten (1a, 1b) hakenförmige Eingriffe (9) aufweist, mit denen das Dachmodul auf karosserieseitige Zapfen (10) aufgeschoben und **dadurch** seitlich verankert ist.

6. Fahrzeug nach einem der Ansprüche 1 bis 5, **dadurch gekennzeichnet, dass** die den Befestigungsbereich (4) abdeckende Blende (5) über Befestigungselemente mit der Karosserie (3) verankert ist.

7. Fahrzeug nach Anspruch 6, **dadurch gekennzeichnet, dass** die Befestigungselemente Schrauben (11b) sind, die mit dem Heck-Querträger (12) verschraubt sind.

8. Fahrzeug nach einem der Ansprüche 1 bis 7, **dadurch gekennzeichnet, dass** zwischen Karosserie (3) und Dachmodulrahmen (1) und zwischen Dachmodulrahmen (1) und Blende (5) ein Dichtungsmaterial (13), bevorzugt ein Moosgummi, angeordnet ist.

9. Fahrzeug nach einem der Ansprüche 1 bis 8, **dadurch gekennzeichnet, dass** der Befestigungsbereich (4) des Dachmoduls mit der Karosserie (3) und die Befestigung der Blende (5) mit der Karosserie (3) unterhalb der Dachoberfläche liegt.

10. Fahrzeug nach einem der Ansprüche 1 bis 9, **dadurch gekennzeichnet, dass** die Befestigung der Blende (5) vom oberen Teil der Heckklappe (14) abgedeckt ist.

11. Verfahren zur Befestigung eines Dachmoduls auf der Karosserie (3) eines Kraftfahrzeugs nach einem der Ansprüche 1 bis 10, **dadurch gekennzeichnet, dass** folgende Arbeitsschritte der Reihe nach ausgeführt werden:
- Ein Dichtungsmaterial (13) wird auf den längsseitigen Rand (1a, 1b) und die Stirnseite (1c) des Dachmodulrahmens (1) und dem später zur Scheibe (2) gewandten Rand (5a) der Blende (5) aufgesetzt.
- Das Dachmodul wird auf die Karosserie (3) aufgesetzt.
- Das Dachmodul wird durch Verschieben in Längsrichtung an den zwei Längsseiten (1a, 1b) über die hakenförmigen Eingriffe (9) und an der dem Verschraubungsbereich (4) entgegengesetzten Stirnseite (1c) über Steckverbindungen mit der Karosserie (3) an drei Seiten (1a, 1b, 1c) verankert.
- Das Dachmodul wird an der den Steckverbindungen entgegengesetzten Stirnseite (1d) an der Karosserie (3) fixiert.
- Die Blende (5) wird auf den Befestigungsbereich (4) aufgesetzt, in Endstellung gebracht und an der Karosserie (3) befestigt.

12. Verfahren nach Anspruch 11, **dadurch gekennzeichnet, dass** das Dachmodul an der den Steckverbindungen entgegengesetzten Stirnseite (1 d) mit Schrauben (11a) an der Karosserie (3) fixiert wird.

13. Verfahren nach Anspruch 11 oder 12, **dadurch gekennzeichnet, dass** die Blende (5) mit Schrauben (11 b) an der Karosserie (3) befestigt wird.

## Claims

1. A vehicle with a roof module and with a roof-module frame (1) having two longitudinal sides (1a, 1b) and two end sides (1c, 1d) and one or more panes (2) built into the bodywork (3) of the motor vehicle, which has an opening in the roof adapted to the roof module, wherein in the built-in state the roof module is arrested in a form-locking manger on three sides (1a, 1b, 1c) by way of plug connections with the bodywork (3) of the motor vehicle, the roof module is secured to the bodywork (3) on one end side (1d), and the securing region (4) is covered by a screen (5), **characterised in that**
- a sealing material (13) is set on the longitudinal-side edge (1a, 1b) and the end side (1c) of the roof-module frame (1) and the edge (5a) of the screen (5) that later faces the pane (2),
- the roof module is set onto the bodywork (3) from without,
- the roof module is anchored on three sides (1a, 1b, 1c), on the two longitudinal sides (1a, 1b) by way of hook-shaped catches (9) and on the end side (1c) opposite the securing region (4) by way of plug connections with the bodywork (3),
- the roof module is fixed on the bodywork (3) on the end side (1d) opposite the plug connections, and
- the screen (5) is set onto the securing region (4) and, brought into the end position, secured on the bodywork (3).

2. A vehicle according to claim 1, **characterised in that** the complete roof module is produced from plastics material, and the panes (2) consist of transparent plastics material, and the roof-module frame (1) is injection-moulded onto the panes (2).

3. A vehicle according to claim 1 or 2, **characterised in that** the end side opposite the securing region (4) has at its roof-module frame (1c) an L- or U-shaped fixing region (6) which is pushed onto a corresponding configuration (7) of the bodywork (3) and is arrested.

4. A vehicle according to claim 3, **characterised in that** the corresponding configuration (7) is arranged on the front cross-beam (8).

5. A vehicle according to one of claims 1 to 4, **characterised in that** the roof-module frame (1) has on its two longitudinal sides (1a, 1b) hook-shaped catches (9) with which the roof module is pushed onto bodywork-side pins (10) and is thereby laterally anchored.

6. A vehicle according to one of claims 1 to 5, **characterised in that** the screen (5) covering the securing region (4) is anchored with the bodywork (3) by way of securing elements.

7. A vehicle according to claim 6, **characterised in that** the securing elements are screws (11b) which are screwed with the tail cross-beam (12).

8. A vehicle according to one of claims 1 to 7, **characterised in that** arranged between the bodywork (3) and the roof-module frame (1) and between the roof-module frame (1) and the screen (5) there is a sealing material (13), preferably a cellular rubber.

9. A vehicle according to one of claims 1 to 8, **characterised in that** the securing region (4) of the roof module with the bodywork (3) and the securement of the screen (5) with the bodywork (3) lie below the roof surface.

10. A vehicle according to one of claims 1 to 9,
**characterised in that** the securement of the screen (5) is covered by the upper portion of the tail-gate (14).

11. A method for securing a roof module on the bodywork (3) of a motor vehicle according to one of claims 1 to 10, **characterised in that** the following work steps are carried out one after the other:
- a sealing material (13) is set onto the longitudinal-side edge (1a, 1b) and the end side (1c) of the roof-module frame (1) and the edge (5a) of the screen (5) that later faces the pane (2),
- the roof module is set onto the bodywork (3),
- the roof module is anchored on three sides (1a, 1b, 1c), by displacement in the longitudinal direction, on the two longitudinal sides (1a, 1b) by way of the hook-shaped catches (9) and on the end side (1c) opposite the screw-connection region (4) by way of plug connections with the bodywork (3),
- the roof module is fixed on the bodywork (3) on the end side (1d) that is opposite the plug connections,
- the screen (5) is set onto the securing region (4), brought into the end position and secured on the bodywork (3).

12. A method according to claim 11, **characterised in that** the roof module is fixed on the bodywork (3) on the end side (1d), opposite the plug connections, with screws (11a).

13. A method according to claim 11 or 12, **characterised in that** the screen (5) is secured on the bodywork (3) with screws (11b).

## Revendications

1. Véhicule automobile comprenant un module de toit qui présente, incorporés à la carrosserie, un cadre (1) comportant deux côtés longitudinaux (la, 1b) et deux côtés frontaux (1c, 1d) ainsi qu'une ou plusieurs vitres, avec dans le toit du véhicule une ouverture adaptée au module de toit, étant précisé qu'au montage le module de toit est sur ses trois côtés (1a, 1b, 1c), fixé avec verrouillage par combinaison de formes, à la carrosserie (3) du véhicule au moyen de liaisons enfichables, que le module de toit est fixé à la carrosserie (3) le long d'un côté frontal (1d) et que la zone de fixation (4) est recouverte par un écran (5), ce véhicule présentant les caractéristiques suivantes :
- un matériau d'étanchéité (13) est placé sur le bord longitudinal (1a, 1b) et sur le côté frontal (1c) du cadre de module de toit (1) ainsi que sur le bord (5a) qui fera face plus tard à la vitre (2), de l'écran (5),
- le module de toit est appliqué de l'extérieur sur la carrosserie (3),
- le module de toit est ancré à la carrosserie (3) le long de trois côtés (1a, 1b, 1c), à savoir le long des deux côtés longitudinaux (1a, 1b) par des attaches (9) en forme de crochets et le long du côté frontal (1c) opposé à la zone de fixation (4), par des liaisons enfichables,
- le module de toit est fixé à la carrosserie (3) le long du côté frontal (1d) opposé aux liaisons enfichables,
- l'écran (5) est placé sur la zone de fixation (4) et il est fixé à la carrosserie (3) après avoir été amené à sa position finale.

2. Véhicule automobile selon la revendication 1, **caractérisé en ce que** tout le module de toit est fabriqué en matière plastique, les vitres (2) sont en matière plastique transparente et le cadre de module de toit (1) est injecté sur les vitres (2).

3. Véhicule automobile selon la revendication 1 ou 2, **caractérisé en ce que** le côté frontal situé à l'opposé de la zone de fixation (4) présente le long de son cadre de module de toit (1c) une zone de fixation (6) en forme de L ou d'U qui est glissée et fixée sur une configuration correspondante (7) de la carrosserie (3).

4. Véhicule automobile selon la revendication 3, **caractérisé en ce que** la configuration correspondante (7) est disposée sur la traverse frontale (8).

5. Véhicule automobile selon une des revendications 1 à 4, **caractérisé en ce que** le cadre de module de toit (1) présente sur ses deux côtés longitudinaux (1a, 1b) des prises (9) en forme de crochets par lesquelles le module de toit est glissé sur des tenons (10) situés sur la carrosserie et ainsi ancrés latéralement.

6. Véhicule automobile selon une des revendications 1 à 5, **caractérisé en ce que** l'écran (5) qui recouvre la zone de fixation (4) est ancré sur la carrosserie par des éléments de fixation.

7. Véhicule automobile selon la revendication 6, **caractérisé en ce que** les éléments de fixation sont des vis (11b) en prise avec la traverse arrière (12).

8. Véhicule automobile selon une des revendications 1 à 7, **caractérisé en ce qu'**un matériau d'étanchéité (13), de préférence une mousse de caoutchouc, est disposé entre la carrosserie (3) et le module de cadre de toit (1) ainsi qu'entre ce module, et l'écran (5).

9. Véhicule automobile selon une des revendications 1 à 8, **caractérisé en ce que** la zone de fixation (4) du module de toit à la carrosserie (3) et la fixation à celle-ci de l'écran (5) se trouvent en dessous de la surface du toit.

10. Véhicule automobile selon une des revendications 1 à 9, **caractérisé en ce que** la fixation de l'écran (5) est recouverte par la partie supérieure du hayon (14).

11. Procédé de fixation d'un module de toit sur la carrosserie (3) d'un véhicule automobile présentant les caractéristiques des revendications 1 à 10, **caractérisé en ce que** les étapes de travail suivantes sont exécutées l'une après l'autre :
- un matériau d'étanchéité (13) est placé sur le bord longitudinal (1a, 1b) et sur le côté frontal (1c) du cadre de module de toit (1) ainsi que sur le bord (5a) qui fera face plus tard à la vitre (2),
- le module de toit est placé sur la carrosserie (3),
- le module de toit, par glissement en direction longitudinale est ancré à la carrosserie (3) le long de trois côtés (1a, 1b, 1c), à savoir le long des deux côtés longitudinaux (1a, 1b) par des attaches (9) en forme de crochets et le long du côté frontal (1c) opposé à la zone de fixation (4), par des liaisons enfichables,
- le module de toit est fixé à la carrosserie (3) le long du côté frontal (1d) opposé aux liaisons enfichables,
- l'écran (5) est placé sur la zone de fixation (4) et il est fixé à la carrosserie (3) après avoir été amené à sa position finale.

12. Procédé selon la revendication 1, **caractérisé en ce que** le module de toit est fixé par des vis (11a) à la carrosserie (3), le long du coté frontal (1d) situé à l'opposé des liaisons enfichables.

13. Procédé selon la revendication 11 ou 12, **caractérisé en ce que** l'écran (5) est fixé par des vis (11b) à la carrosserie (3).
